## Europäisches Patentamt
## European Patent Office
## Office européen des brevets

(19)

(11) Numéro de publication: **0 130 909**
**B1**

# FASCICULE DE BREVET EUROPÉEN

(12)

(45) Date de publication du fascicule du brevet:
**16.03.88**

(21) Numéro de dépôt: **84401374.8**

(22) Date de dépôt: **28.06.84**

(51) Int. Cl.⁴: **B 29 C 47/88 //**
**B29L23/00**

(54) **Dispositif et procédé de refroidissement de feuilles plastiques.**

(30) Priorité: **29.06.83 FR 8310721**
**24.05.84 FR 8408123**

(43) Date de publication de la demande:
**09.01.85 Bulletin 85/2**

(45) Mention de la délivrance du brevet:
**16.03.88 Bulletin 88/11**

(84) Etats contractants désignés:
**AT BE CH DE FR GB IT LI LU NL SE**

(56) Documents cité:
**EP-A-0 006 185**
**EP-A-0 077 661**
**CH-A-594 490**
**DE-A-1 917 521**
**DE-A-2 256 942**
**JP-A-53 008 339**
**US-A-3 568 252**

**PATENTS ABSTRACTS OF JAPAN, vol. 5, no. 90 (M-73) 762 , 12 juin 1981; & JP - A - 56 37122 (GUNZE K.K.) 10-04-1981**
**PATENTS ABSTRACTS OF JAPAN, vol. 5, no. 90(M-73) 762 , 12 juin 1981; & JP - A - 56 37123 (GUNZE K.K.) 10-04-1981**

(73) Titulaire: **Société Chimique des Charbonnages S.A., Tour Aurore Place des Reflets, F-92080 Paris La Défense 2 Cédex 5 (FR)**

(72) Inventeur: **Audureau, Joel, 50 rue des Normands, F-62290 Noeux les Mines (FR)**
Inventeur: **Caron, Michel René, 97, rue Jeanne d'Arc, F-59000 Lille (FR)**
Inventeur: **Hervais, Vincent, 39, rue Jean Bart, F-62160 Bully les Mines (FR)**

(74) Mandataire: **Dubost, Thierry, SOCIETE CHIMIQUE DES CHARBONNAGES Service Propriété Industrielle B.P. 57, F-62670 Mazingarbe (FR)**

LIBER, STOCKHOLM 1988

## Description

La présente invention concerne un dispositif de refroidissement et un procédé de fabrication de feuilles plastiques obtenues par soufflage de gaine.

On connait déjà un dispositif destiné à obtenir de la feuille en gaine soufflée de bonne clarté, constitué par un ensemble de trois éléments juxtaposés; celui-ci se compose, en suivant le trajet de la gaine, à sa partie basse, d'une chambre close dite de recuit, puis à sa partie intermédiaire, d'un anneau de soufflage intensif dont le flux d'air est dirigé perpendiculairement à la gaine, cet anneau ayant pour fonction d'accélérer la solidification de la matière, et enfin à sa partie haute d'une chambre supérieure dans laquelle la gaine est en contact avec un flux d'air dirigé dans la direction de tirage de la gaine.

Un tel dispositif a déjà été décrit dans la demande de brevet européen publié sous le numéro 0 041 803. Ce dispositif permet d'extruder des feuilles de polyéthylène selon un taux de gonflage égal à 2. Cependant il présente l'inconvénient de ne pas permettre une extrusion satisfaisante de feuilles de polyéthylène selon un taux de gonflage supérieur à 2, comme on le démontre dans les exemples comparatifs ci-après. D'autre part un tel dispositif présente l'inconvénient de ne pouvoir améliorer les propriétés optiques de la gaine que pour des résines, telle que polyéthylène basse densité radicalaire, copolymère d'éthylène/acétate de vinyle et polyéthylène basse densité linéaire, dont les propriétés optiques étaient déjà relativement satisfaisantes. Par propriétés optiques satisfaisantes pour l'application à la fabrication de gaines, on entend un trouble (déterminé selon la norme ASTM D 103-77) non supérieur à 7 %. Enfin un dernier inconvénient de ce dispositif réside dans l'impossibilité d'améliorer les propriétés optiques de la gaine (par rapport à un système classique de refroidissement) tout en assurant un débit élevé de matière.

La présente invention a pour but de permettre un refroidissement plus efficace quand la nécessité s'en fait sentir et donc d'obtenir des gaines soufflées de bonnes propriétés optiques, notamment clarté, trouble, à un débit important et pour un grand nombre de résines.

Le dispositif selon l'invention, disposé au-dessus d'une filière annulaire, comprend à sa partie inférieure une chambre basse (3, 4), à sa partie intermédiaire un anneau de soufflage intensif (10) dont le jet d'air (9) est dirigé vers la gaine (1), cet anneau ayant pour fonction d'accélérer la solidification de la matière, à sa partie supérieure une chambre haute (14, 15) dans laquelle la gaine est en contact avec le flux d'air (7) dirigé dans la direction de tirage de la gaine et il se caractérise par le fait que la chambre basse (3, 4) est munie d'au moins une ouverture (6) permettant l'admission d'air aspiré (8) par le flux d'air (7).

Chaque ouverture (6) de ladite chambre basse (3, 4) peut être réglable au moyen d'un système constitué par exemple de disques à trous. En outre ladite chambre basse peut avoir une hauteur réglable, obtenue avantageusement par une série d'éléments emboîtables de hauteurs différentes. De la même manière la chambre haute peut avoir une hauteur réglable obtenue avantageusement par une série d'éléments emboîtables de hauteur différente. Le dispositif peut comporter, en outre, des moyens permettant de modifier le débit du flux d'air dirigé, au niveau de la chambre haute, dans la direction de tirage de la gaine.

L'anneau de soufflage intensif est avantageusement constitué de telle sorte que l'angle A défini entre l'axe perpendiculaire à la gaine et la direction du jet d'air sortant de l'anneau, soit compris entre 0 et 85°.

Selon un mode de réalisation de l'invention, le dispositif peut comprendre en outre un système de refroidissement interne comprenant au moins un canal d'amenée d'air et au moins un canal d'évacuation d'air pulsé traversant axialement la filière annulaire. Par exemple le système de refroidissement peut comprendre un canal d'arrivée axial de la filière annulaire, au centre duquel est disposé un canal de sortie d'air, en vue de refroidir la partie interne de la gaine.

Ce système de refroidissement interne peut en outre être réglable en hauteur au moyen d'au moins un élément emboîtable. Cet élément emboîtable peut comporter au moins une partie étanche et/ou au moins une partie possédant des ouvertures en vue de laisser s'échapper un flux d'air, ce dernier ayant pour fonction de refroidir l'intérieur de la gaine, dès la sortie de la filière et, avant même que celle-ci soit en contact des flux d'air sortant du système de refroidissement interne proprement dit.

Selon un autre mode de réalisation de l'invention, l'intensité du flux d'air provenant de l'anneau de soufflage intensif peut être modifiée par changement de l'épaisseur F de la lèvre de soufflage de cet anneau entre 0,1 mm et 15 mm; on entend par lèvre de soufflage les bords de l'ouverture permettant le passage du jet d'air sortant de l'anneau de soufflage intensif vers la gaine.

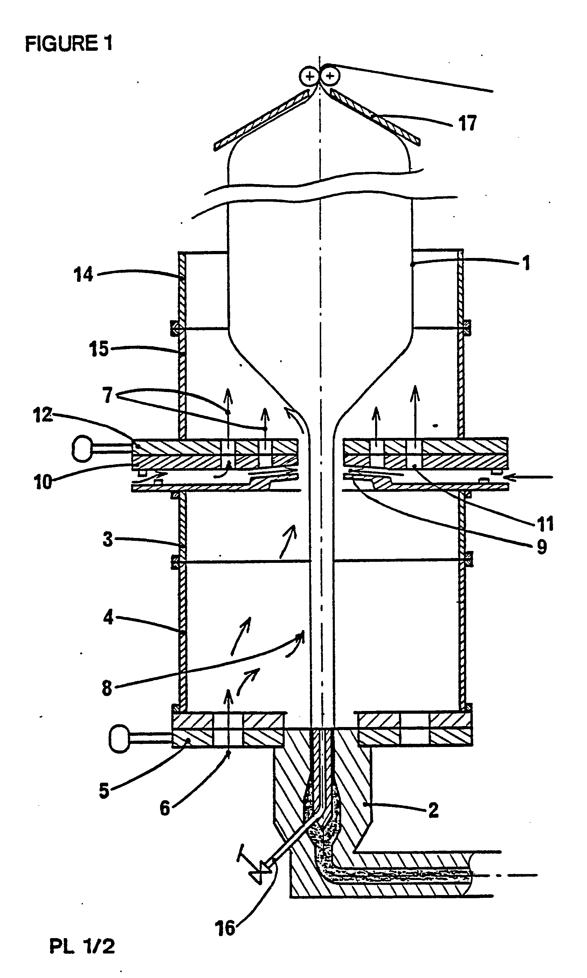

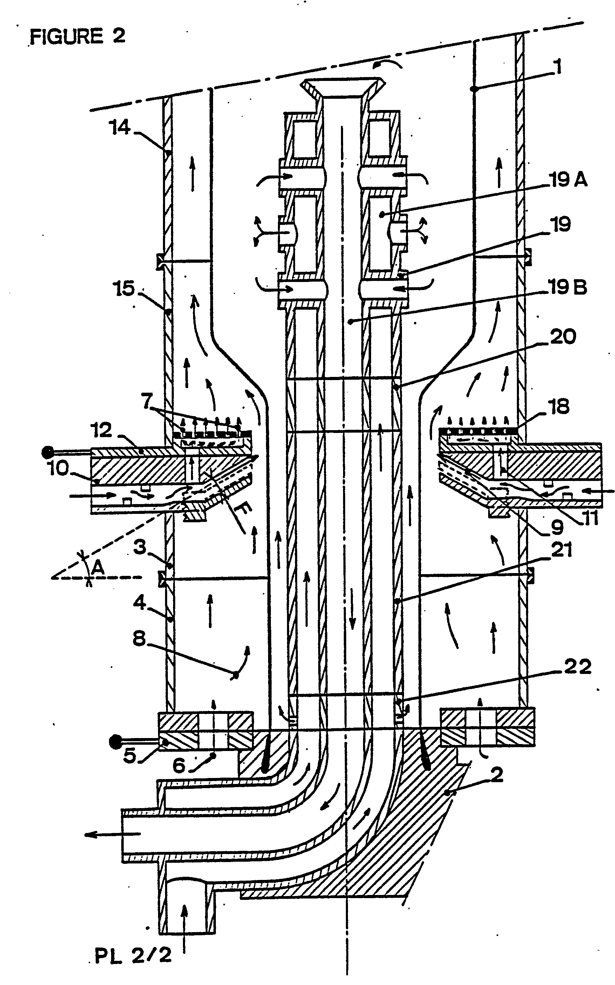

Dans le but de mieux faire comprendre l'invention, on va décrire maintenant à titre d'illustration et sans autre caractère limitatif deux modes de réalisation du dispositif, dont les figures 1 et 2, en annexe, représentent les vues en coupe. Les éléments numérotés 1 à 15 sur ces deux figures sont communs aux deux modes de réalisation.

Dans le premier mode de réalisation, représenté sur la figure 1, la gaine de matière 1 est obtenue à partir de matière fondue provenant de la filière annulaire 2, en suivant le trajet de la matière à partir de la filière, la gaine est d'abord refroidie modérément dans la chambre basse constituée d'au moins deux éléments emboîtables 3 et 4, cette chambre comporte à sa partie inférieure un système d'ouvertures réglables 5 permettant d'ajuster l'admission d'air aspiré 6 sous l'effet de dépression engendrée par le flux d'air 7 projeté dans la chambre haute constituée par les éléments 14 et 15; dans cette première partie la gaine est refroidie modérément par le courant d'air 8 et ne subit pas de modifications dimensionnelles notables. La gaine est ensuite refroidie violemment au moyen de jet d'air 9 sortant de l'anneau de soufflage 10, la direction de ce jet étant perpendiculaire à ladite gaine 1. Après être sortie de l'anneau de soufflage 10, la gaine arrive dans la chambre haute constituée d'au moins 2 éléments emboîtables 14 et 15, dans laquelle il existe un flux d'air permettant à l'air de sortir suivant les flux 7 dans la chambre haute constituée par les éléments 14 et 15 selon la direction de tirage de la gaine 1, le débit des flux d'air 7 étant modifiable au moyen du système de réglage 12. C'est dans cette chambre haute, que la gaine prend sa dimension finale sous l'action de la surpression d'air qui règne à l'intérieur de celle-ci, l'air de surpression étant introduit par le tube de mise en pression 16. Finalement la gaine est définitivement solidifiée et tirée au moyen du système d'entraînement 17.

Dans le second mode de réalisation, représenté sur la figure 2, les jets d'air 9 sortant de l'anneau de soufflage 10 peuvent être réglés à la fois en direction et en intensité:

- en direction, en employant un jeu de différents anneaux de soufflage 10, possédant chacun un angle de soufflage A différent ; cet angle A pouvant être modifié entre 0 et 85°,

- en intensité par modification de l'ouverture F de la lèvre de soufflage, montée sur l'anneau de soufflage 10. Bien évidemment, cette modification entraîne un changement du rapport du flux d'air 9 soufflé vers la gaine au flux d'air 11 projeté dans la chambre haute.

Les perturbations des flux d'air 7 sont diminuées en plaçant par exemple une grille à trous 18, disposée sur le système de réglage de sortie d'air 12. L'air de surpression est introduit dans la chambre haute par un système de refroidissement 19, placé à l'intérieur de ladite gaine 1, réglable en hauteur au moyen des éléments emboîtables 20, 21 et 22, l'élément 22 étant muni d'ouvertures en vue de laisser s'échapper un flux d'air dès la sortie de la filière. Ce système de refroidissement comprend un canal d'amenée d'air 19Aa et un canal d'évacuation d'air 19B.

Finalement la gaine est définitivement solidifiée et tirée au moyen d'un système d'entraînement 17 (non représenté) du même type que celui représenté précédemment pour le premier mode de réalisation.

Un second objet de l'invention consiste en un procédé de fabrication de feuilles plastiques par soufflage de gaine, comprenant d'une part une étape d'extrusion-soufflage de matière plastique fondue provenant d'une filière d'extrudeuse et d'autre part une étape de refroidissement de la gaine soufflée ainsi obtenue, caractérisé en ce que l'étape de refroidissement est réalisée par passage de la gaine à travers un dispositif du type précédemment décrit. En particulier il est avantageux que le rapport du débit d'air aspiré dans la chambre basse au débit d'air introduit dans l'anneau de soufflage soit compris entre 0,1 et 0,5.

Le procédé selon l'invention présente les avantages d'obtenir des films de bonnes propriétés (clarté, trouble) à partir de résines telles que polyéthylène radicalaire, polyéthylène haute densité, polypropylène, polybutène-1, polyéthylène basse densité linéaire et leurs mélanges, ayant un indice de fluidité (déterminé selon la norme ASTM D 1238/73) compris entre 0,1 et 10 dg/min. En particulier le procédé selon l'invention permet de fabriquer des films ayant de bonnes propriétés optiques à partir de polyéthylène radicalaire d'indice de fluidité supérieur à 3 dg/min, alors que cette résine était jusqu'ici réservée à la fabrication d'objets par les techniques de moulage. En outre ce procédé permet également d'obtenir des films à des débits ou/et des taux de gonflage notablement plus importants que ceux autorisés par le procédé de la demande de brevet européen n° 0 041 803.

Dans le but de mieux faire comprendre les avantages de ce procédé par rapport à l'art antérieur, les exemples suivants sont donnés à titre illustratif et non limitatif.

**EXEMPLES 1 à 4**

On fabrique des films d'épaisseur 40 micromètres par extrusion-soufflage de matière plastique fondue provenant de la filière d'une extrudeuse de 30 mm de diamètre puis, refroidissement par le dispositif décrit ci-dessus et représenté sur la figure 1. Les caractéristiques de la filière et du dispositif de refroidissement sont les suivantes :

- filière de 50 mm de diamètre et entrefer de 0,5 mm.
- dispositif de refroidissement : hauteur de la chambre basse : 250 mm, hauteur de la chambre haute : 250 mm.

Le rapport R du débit d'air aspiré dans la chambre basse au débit d'air introduit dans l'anneau de soufflage est indiqué dans le tableau I ci-après.

Le taux de gonflage TG (rapport du diamètre de la gaine à celui de la filière), et de débit de matière Q (exprimé en kg/heure) sont ceux aussi indiqué dans le tableau I ci-après.

La matière utilisée est un polyéthylène basse densité radicalaire commercialisé sous la marque LOTRENE FA 0401 (fabriqué par CdF Chimie) ayant un indice de fluidité de 4 dg/min (mesuré selon norme ASTM D 1238-73) et une densité de 0,918.

Dans le tableau I ci-après sont indiqués en outre:

- l'extrudabilité notée (+) lorsque la gaine soufflée est exempte de défauts optiques tels que rayures, notée (-) lorsque la gaine soufflée présente de tels défauts optiques.
- le résultat des mesures de la clarté (C), exprimé en % et déterminé selon la norme ASTM D 1746-78.

**TABLEAU I**

| Exemple | Q | TG | R | E | C |
|---|---|---|---|---|---|
| 1 | 3 | 2 | 0,47 | + | 46 |
| 2 | 6,9 | 2 | 0,49 | + | 41 |
| 3 | 4,1 | 3,2 | 0,13 | + | 62 |
| 4 | 6,9 | 3,2 | 0,15 | + | 49 |

## EXEMPLES COMPARATIFS 1A à 4A

On fabrique des films d'épaisseur 40 micromètres par extrusion-soufflage de la même matière que celle utilisée aux exemples 1 à 4 ci-dessus et sur la même extrudeuse que celle desdits exemples, puis refroidissement au moyen d'un dispositif du type décrit dans la demande de brevet européen n° 0 041 803. Dans le tableau II ci-après sont reportés d'une part les conditions opératoires telles que Q, TG et R, et d'autre part les résultats des propriétés obtenues sur la gaine soufflée.

**TABLLEAU II**

| Exemple | Q | TG | R | E | C |
|---|---|---|---|---|---|
| 1A | 3 | 2 | 0 | - | 38 |
| 2A | 6,9 | 2 | 0 | - | 36 |
| 3A | 4,1 | 3,2 | 0 | - | 61 |
| 4A | 6,9 | 3,2 | 0 | - | 41 |

## EXEMPLES 5 à 8

La matière utilisée est du polyéthylène basse densité radicalaire commercialisé sous la marque LOTRENE FB 5026 (fabriqué par CdF Chimie) ayant un indice de fluidité de 0,6 dg/min (mesuré selon la norme ASTM D 1238-73) et une densité de 0,921. Dans le tableau III ci-dessous sont reportés les conditions opératoires telles que Q, TG et R ainsi que les résultats obtenus sur la gaine soufflée de 40 micromètres d'épaisseur, cela au moyen du même dispositif que celui des exemples 1 à 4.

**TABLEAU III**

| Exemple | Q | TG | R | E | C |
|---|---|---|---|---|---|
| 5 | 3 | 2 | 0,14 | + | 16 |
| 6 | 6,8 | 2 | 0,18 | + | 16 |
| 7 | 3 | 3,2 | 0,26 | + | 21 |
| 8 | 6,8 | 3,2 | 0,11 | + | 20 |

## EXEMPLES COMPARATIFS 5A à 8A

On fabrique de la gaine soufflée de 40 micromètres d'épaisseur, par extrusion-soufflage, la même matière plastique que celle utilisée dans les exemples 5 à 8, et au moyen du même dispositif que celui employé dans les exemples 1A à 4A. Les conditions opératoires ainsi que les résultats obtenus sont reproduits dans le tableau IV ci-dessous; dans lequel l'extrudabilité notée (0) indique qu'il est impossible d'obtenir de la gaine soufflée.

## TABLEAU IV

| Exemple | Q | TG | R | E | C |
|---|---|---|---|---|---|
| 5A | 3 | 2 | 0 | - | 11 |
| 6A | 6,8 | 2 | 0 | - | 11 |
| 7A | 3 | 3,2 | 0 | 0 | - |
| 8A | 6,8 | 3,2 | 0 | - | 20 |

## EXEMPLES COMPARATIFS 9 et 9A

Dans le tableau V ci-après sont reportés les résultats obtenus sur du polyéthylène basse densité linéaire commercialisé sous la marque LOTREX FW 1290 (fabriqué par CdF Chimie), ayant un indice de fluidité 1 dg/min et une densité de 0,919. Le débit matière est égal à 3 kg/h et le taux de gonflage est de 2. Dans l'exemple 9, le système de refroidissement est le dispositif décrit à la figure 1; dans l'exemple 9A, il est du type décrit dans la demande de brevet européen n° 0 041 803. T représente le trouble exprimé en % et déterminé selon la norme ASTM D 103-77. L'extrudeuse employée est la même que celle des exemples 1 à 8.

## TABLEAU V

| Exemple | E | R | T |
|---|---|---|---|
| 9 | + | 0,36 | 6,7 |
| 9A | - | 0 | 7,6 |

## EXEMPLES 10 à 12

On fabrique des films par extrusion-soufflage de matière plastique provenant de la filière d'une extrudeuse industrielle commercialisée par la société WINDMOLLER & HOLSCHER de 60 mm de diamètre de vis, puis refroidissement par le dispositif décrit ci-dessus et représenté sur la figure 2.
Les caractéristiques de la filière et du dispositif de refroidissement sont les suivantes :
- filière de 160 mm de diamètre et entrefer de 0,8 mm d'épaisseur,
- dispositif de refroidissement: hauteur de la chambre basse : 640 mm, hauteur de la chambre haute: 320 mm, l'angle du flux d'air sortant de l'anneau de soufflage étant égal à A = 75°; l'ouverture de la lèvre de soufflage permettant le passage du flux d'air dirigé vers la gaine étant égal à F = 7 mm.
La matière utilisée est du polyéthylène basse densité radicalaire commercialisée sous la marque LOTRENE FB 3010 par la société CdF CHIMIE ayant un indice de fluidité de 0,25 dg/min (mesuré selon la norme ASTM D 1238-73) et une densité de 0,922.
Dans le tableau VI, ci-dessous, sont reportées les conditions opératoires telles que TG et R, ainsi que les résultats obtenus sur la gaine soufflée d'épaisseur e en micromètres. Le débit est égal à 108 kg/h.

## TABLEAU VI

| Exemple | TG | R | e | E |
|---|---|---|---|---|
| 10 | 2 | 0,26 | 60 | + |
| 11 | 3,4 | 0,17 | 60 | + |
| 12 | 3,4 | 0,39 | 20 | + |

## EXEMPLES COMPARATIFS 10A à 12A

On fabrique des films au moyen de la même extrudeuse et à partir de la même matière que celles utilisées dans les exemples 10 à 12, mais cette fois ci en prenant, pour refroidir la gaine, un dispositif du même type que celui utilisé dans les exemples 10 à 12 ci-dessus mais pour lequel on a fermé les ouvertures situées au bas de la chambre basse afin de rendre celle-ci close.

# 0 130 909

Le débit matière est également de 108 kg/h. Les conditions opératoires ainsi que les résultats obtenus sont reproduits dans le tableau VII ci-dessous.

L'extrudabilité E notée (0) indique qu'il est impossible d'obtenir de la gaine soufflée.

## TABLEAU VII

| Exemple | TG | R | e | E |
|---|---|---|---|---|
| 10A | 2 | 0 | - | 0 |
| 11A | 3,4 | 0 | 60 | - |
| 12A | 3,4 | 0 | 20 | - |

## EXEMPLES 13 à 15

On utilise le même dispositif que celui utilisé pour les essais 10 à 12. La matière plastique employée est du polyéthylène radicalaire basse densité commercialisé sous la marque LOTRENE FB 5005 par la société CdF CHIMIE ayant un indice de fluidité de 0,6 dg/min (mesuré selon la norme ASTM D 1236-73) et une densité de 0,921.

Dans le tableau VIII, ci-dessous, sont reportés les conditions opératoires telles que TG, R ainsi que les résultats obtenus sur la gaine soufflée. Le débit est égal à 102 kg/h.

## TABLEAU VIII

| Exemple | TG | R | e | E |
|---|---|---|---|---|
| 13 | 2 | 0,26 | 32 | + |
| 14 | 3,4 | 0,35 | 20 | + |
| 15 | 3,4 | 0,42 | 30 | + |

## EXEMPLES COMPARATIFS 13A à 15A

On fabrique de la gaine soufflée à partir de la même matière que celle utilisée pour les essais 13 à 15 mais cette fois ci en utilisant le dispositif déjà employé dans les exemples comparatifs 10A à 12A.

Dans le tableau IX ci-dessous sont reportés les conditions opératoires ainsi que les résultats obtenus sur la gaine soufflée.

Le débit est identique à celui des exemples 13 à 15, c'est-à-dire 102 kg/h.

## TABLEAU IX

| Exemple | TG | R | e | E |
|---|---|---|---|---|
| 13A | 2 | 0 | 32 | - |
| 14A | 3,4 | 0 | - | 0 |
| 15A | 3,4 | 0 | - | 0 |

## EXEMPLES 16 et 16A

On fabrique des films par extrusion-soufflage à partir d'un mélange de résines constitué, en outre, de 75 % de polyéthylène linéaire commercialisé sous la marque LOTREX FW 1290 par la société CdF CHIMIE et de 25 % de polyéthylène radicalaire commercialisé sous la marque LOTRENE FB 3010 par la société CdF CHIMIE.

Dans l'exemple 16, le dispositif utilisé est celui déjà utilisé dans les exemples 10 à 15 ; et dans l'exemple 16A le dispositif utilisé est celui déjà employé dans les exemples 10A à 15A.

Les essais, reproduits dans le tableau X ci-dessous ont été effectués à taux de gonflage TG=2 pour une épaisseur de gaine soufflée égale à e=25 micromètres et pour un débit matière de 65 kg/h.

6

0 130 909

**TABLEAU X**

| Exemple | R | E |
|---------|------|---|
| 16 | 0,32 | + |
| 16A | 0 | - |

**Revendications**

1. Dispositif de refroidissement de feuilles plastiques obtenues par soufflage de gaine comprenant à sa partie inférieure une chambre basse (3, 4), à sa partie intermédiaire un anneau de soufflage intensif (10) dont le jet d'air (9) est dirigé vers la gaine (1) et à sa partie supérieure une chambre haute (14, 15) dans laquelle la gaine (1) est en contact avec le flux d'air (7) dirigé dans la direction de tirage de la gaine, caractérisé en ce que la chambre basse (3, 4) est munie d'au moins une ouverture (6) permettant l'admission d'air aspiré (8) par le flux d'air (7).

2. Dispositif de refroidissement selon la revendication 1, caractérisé en ce que au moins une ouverture (6) de la chambre basse (3, 4) est réglable.

3. Dispositif de refroidissement selon la revendication 2, caractérisé en ce que ladite ouverture (6) est réglable au moyen d'un système de disques à trous (5).

4. Dispositif de refroidissement selon l'une des revendications 1 à 3, caractérisé en ce que la hauteur de ladite chambre basse (3, 4) est réglable.

5. Dispositif de refroidissement selon l'une des revendications 1 à 4, caractérisé en ce que la hauteur de la chambre haute (14, 15) est réglable.

6. Dispositif de refroidissement selon l'une des revendications 1 à 5, caractérisé en ce qu'il comporte en outre des moyens permettant de modifier le débit du flux d'air (7) dirigé au niveau de la chambre haute, dans la direction de tirage de la gaine.

7. Dispositif de refroidissement selon l'une des revendications 1 à 6, caractérisé en ce que l'anneau de soufflage intensif (10) est constitué de telle sorte que l'angle A défini entre l'axe perpendiculaire à la gaine (1) et la direction du jet d'air (9) sortant de l'anneau, soit compris entre 0 et 85°.

8. Dispositif de refroidissement selon l'une des revendications 1 à 7 caractérisé en ce que l'épaisseur F de la lèvre de soufflage de l'anneau de soufflage intensif (10), constituée par les bords de l'ouverture permettant le passage du jet d'air (9) sortant de l'anneau vers la gaine, est réglable entre 0,1 mm et 15 mm.

9. Dispositif de refroidissement selon l'une des revendications 1 et 8, ledit dispositif étant disposé au-dessus d'une filière annulaire (2), caractérisé en ce qu'il comprend en outre un système de refroidissement interne comprenant au moins un canal d'amenée d'air (19A) et au moins un canal d'évacuation d'air pulsé (19B) traversant axialement la filière annulaire.

10. Dispositif de refroidissement selon la revendication 9, caractérisé en ce que le système de refroidissement interne est réglable en hauteur.

11. Dispositif de refroidissement selon la revendication 10, caractérisé en ce que le réglage du système de refroidissement interne est effectué au moyen d'au moins un élément emboîtable (20, 21, 22).

12. Dispositif de refroidissement selon la revendication 11, caractérisé en ce que l'élément emboîtable comprend au moins une partie étanche (20, 21) et/ou au moins une partie possédant des ouvertures (22).

13. Procédé de fabrication de feuilles plastiques par soufflage de gaine, comprenant d'une part une étape d'extrusion-soufflage de matière plastique fondue provenant d'une filière d'extrudeuse et d'autre part une étape de refroidissement de la gaine soufflée ainsi obtenue, caractérisé en ce que l'étape de refroidissement est réalisée par passage de la gaine à travers un dispositif selon les revendications 1 à 12.

14. Procédé selon la revendication 13, caractérisé en ce que le rapport du débit d'air aspiré dans la chambre basse (3, 4) au débit d'air introduit dans l'anneau de soufflage intensif (10) est compris entre 0,1 et 0,5.

15. Procédé selon l'une des revendications 13 et 14, caractérisé en ce que la matière plastique est une résine choisie parmi les polyéthylènes, le polypropylène, le polybutène-1 et leurs mélanges.

16. Procédé selon la revendications 15, caractérisé en ce que l'indice de fluidité de ladite résine est compris entre 0,1 et 10 dg/min.

**Patentansprüche**

1. Vorrichtung zum Kühlen von durch Schlauchblasen erhaltenen Kunststoffolien, welche in ihrem unteren Teil eine untere Kammer (3, 4), in ihrem mittleren Teil einen Intensivblasring (10), dessen Luftstrahl (9) gegen die Schlauchfolie (1) gerichtet ist, und in ihrem oberen Teil eine obere Kammer (14, 15) aufweist, in der die Schlauchfolie (1) mit dem in Ziehrichtung der Schlauchfolie gerichteten Luftstrom (7) in Kontakt ist, dadurch gekennzeichnet, daß die untere Kammer (3, 4) mit mindestens einer Öffnung (6) versehen ist, die den Eintritt

**0 130 909**

von durch den Luftstrom (7) angesaugter Luft (8) gestattet.

2. Kühlvorrichtung nach Anspruch 1, dadurch gekennzeichnet, daß mindestens eine Öffnung (6) der unteren Kammer (3, 4) einstellbar ist.

3. Kühlvorrichtung nach Anspruch 2, dadurch gekennzeichnet, dan die genannte Öffnung (6) mittels eines Lochscheibensystems (5) einstellbar ist.

4. Kühlvorrichtung nach einem der Ansprüche 1 bis 3, dadurch gekennzeichnet, daß die Höhe der genannten unteren Kammer (3, 4) einstellbar ist.

5. Kühlvorrichtung nach einem der Ansprüche 1 bis 4, dadurch gekennzeichnet, daß die Höhe der oberen Kammer (14, 15) einstellbar ist.

6. Kühlvorrichtung nach einem der Ansprüche 1 bis 5, dadurch gekennzeichnet, daß sie weiters Mittel enthält, die erlauben, die Strömungsmenge des auf Höhe der oberen Kammer in Ziehrichtung der Schlauchfolie gerichteten Luftstromes (7) zu verändern.

7. Kühlvorrichtung nach einem der Ansprüche 1 bis 6, dadurch gekennzeichnet, daß der Intensivblasring (10) so ausgebildet ist, daß der Winkel A zwischen der zur Schlauchfolie (1) senkrechten Achse und der Richtung des aus dem Ring austretenden Luftstrahls (9) zwischen 0 und 85° beträgt.

8. Kühlvorrichtung nach einem der Ansprüche 1 bis 7, dadurch gekennzeichnet, daß die Dicke F der Blaslippe des Intensivblasringes (10), die von den Rändern der den Durchtritt des aus dem Ring gegen die Schlauchfolie austretenden Luftstrahls (9) gestattenden Öffnung gebildet wird, zwischen 0,1 mm und 15 mm einstellbar ist.

9. Kühlvorrichtung nach einem der Ansprüche 1 bis 8, angeordnet oberhalb einer Ringdüse (2), dadurch gekennzeichnet, daß sie weiters ein internes Kühlsystem mit mindestens einem Luftzufuhrkanal (19A) und mindestens einem die Ringdüse axial durchsetzenden Kanal (19B) zur Abfuhr der Gebläseluft besitzt.

10. Kühlvorrichtung nach Anspruch 9, dadurch gekennzeichnet, daß das interne Kühlsystem höheneinstellbar ist.

11. Kühlvorrichtung nach Anspruch 10, dadurch gekennzeichnet, daß die Einstellung des internen Kühlsystems mit Hilfe mindestens eines Paßelementes (20,-21, 22) erfolgt.

12. Kühlvorrichtung nach Anspruch 11, dadurch gekennzeichnet, daß das Paßelement mindestens einen dichten Teil (20, 21) und/oder mindestens einen Öffnungen aufweisenden Teil (22) umfaßt.

13. Verfahren zur Herstellung von Kunststoffolien durch Schlauchblasen, welches einerseits einen Schritt des Extrusionsblasens von aus einer Extrusionsdüse austretendem Kunststoff, und anderseits einen Schritt des Kühlens der so erhaltenen geblasenen Schlauchfolie umfaßt, dadurch gekennzeichnet, daß der Kühlschritt durch Hindurchführen der Schlauchfolie durch eine Vorrichtung nach den Ansprüchen 1 bis 12 erfolgt.

14. Verfahren nach Anspruch 13, dadurch gekennzeichnet, daß das Verhältnis zwischen der Strömungsmenge der in der unteren Kammer (3, 4) angesaugten Luft zur Strömungsmenge der in den Intensivblasring (10) eingespeisten Luft zwischen 0,1 und 0,5 beträgt.

15. Verfahren nach Anspruch 13 oder 14, dadurch gekennzeichnet, daß der Kunststoff ein aus der Gruppe bestehend aus den Polyäthylenen, Polypropylen, Poly-buten-1 und deren Mischungen ausgewähltes Harz ist.

16. Verfahren nach Anspruch 15, dadurch gekennzeichnet, daß der Fließindex des genannten Harzes zwischen 0,1 und 10 dg/min beträgt.

### Claims

Device for cooling plastic films obtained by bubble blowing comprising in its lower part a low chamber (3, 4) and at its intermediate part an intensive blowing ring (10) whose air jet (9) is directed towards the bubble (1) and in its upper part a high chamber (14, 15) in which the bubble (1) is in contact with the air flow (7) directed in the direction of drawing of the bubble, characterized in that the low chamber (3, 4) is provided with at least one opening (6) permitting the intake of air drawn in (8) by the air flow (7).

2. Cooling device according to Claim 1, characterized in that at least one opening (6) of the low chamber (3, 4) is adjustable.

3. Cooling device according to Claim 2, characterized in that the said opening (6) is adjustable by means of a system of discs with holes (5).

4. Cooling device according to one of Claims 1 to 3, characterized in that the height of the said low chamber (3, 4) is adjustable.

5. Cooling device according to one of Claims 1 to 4, characterized in that the height of the high chamber (14, 15) is adjustable.

6. Cooling device according to one of Claims 1 to 5, characterized in that it additionally comprises means making it possible to modify the flow rate of the air flow (7) directed in the region of the high chamber, in the direction of drawing of the bubble.

7. Cooling device according to one of Claims 1 to 6, characterized in that the intensive blowing ring (10) is constructed so that the angle A defined between the axis perpendicular to the bubble (1) and the direction of the air jet (9) leaving the ring is between 0 and 85°.

8. Cooling device according to one of Claims 1 to 7, characterized in that the thickness F of the blowing lip of the intensive blowing ring (10), consisting of the edges of the opening permitting the passage of the air jet (9) leaving the ring towards the bubble, is adjustable between 0.1 mm and 15 mm.

8

9. Cooling device according to either of Claims 1 and 8, the said device being arranged above an annular die (2), characterized in that it additionally comprises an internal cooling system comprising at least one air delivery channel (19A) and at least one channel for evacuating pulsed air (19B) passing axially through the annular die.

10. Cooling device according to Claim 9, characterized in that the internal cooling system is adjustable in height.

11. Cooling device according to Claim 10, characterized in that the adjustment of the internal cooling system is performed by means of at least one nestable component (20, 21, 22).

12. Cooling device according to Claim 11, characterized in that the nestable component comprises at least one leak-proof part (20, 21) and/or at least one part which has openings (22).

13. Process for the manufacture of plastic films by bubble blowing, comprising, on the one hand, a stage of extrusion-blowing of molten plastic material originating from an extruder die and, on the other hand, a cooling stage of the blown bubble thus obtained, characterized in that the cooling stage is carried out by passing the bubble through a device according to Claims 1 to 12.

14. Process according to Claim 13, characterized in that the ratio of the flow rate of the air drawn into the low chamber (3, 4) to the flow rate of air introduced into the intensive blowing ring (10) is between 0.1 and 0.5.

15. Process according to either of Claims 13 and 14, characterized in that the plastic material is a resin chosen from polyethylenes, polypropylene, poly-1-butene and mixtures thereof.

16. Process according to Claim 15, characterized in that the melt index of the said resin is between 0.1 and 10 dg/min.

**FIGURE 1**

PL 1/2

**FIGURE 2**

PL 2/2